# EUROPEAN PATENT SPECIFICATION

(11) **EP 3 854 195 B1**
(45) Date of publication and mention of the grant of the patent: **13.12.2023**
(21) Application number: 21162423.4
(22) Date of filing: 02.12.2019
(51) Int. Cl.: A01D 34/00, A01D 37/00, A01D 41/00, A01D 43/00, B60K 28/10, B62D 25/10

(54) **WORK VEHICLE**
NUTZFAHRZEUG
VÉHICULE DE TRAVAIL

(30) Priority: 13.03.2019 JP 2019046290; 22.05.2019 JP 2019096111
(43) Date of publication of application: 28.07.2021
(62) Divisional of application: 19212949.2
(73) Proprietor: Kubota Corporation, Osaka-shi, Osaka 556-8601 (JP)
(72) Inventor: KAGO, Tatsuki, SAKAI-SHI, Osaka 5900823 (JP); YAMASHITA, Nobuyuki, SAKAI-SHI, Osaka 5900823 (JP); AKAI, Yuto, SAKAI-SHI, Osaka 5900823 (JP); TOKUNAGA, Tatsuro, SAKAI-SHI, Osaka 5900823 (JP); TASHIMA, Shinya, SAKAI-SHI, Osaka 5900823 (JP); KUMASHIRO, Takashi, SAKAI-SHI, Osaka 5900823 (JP); TONOYA, Yoshihisa, SAKAI-SHI, Osaka 5900823 (JP); MIYAGUCHI, Kazutomo, SAKAI-SHI, Osaka 5900823 (JP); YAMAMOTO, Tomohisa, SAKAI-SHI, Osaka 5900823 (JP)
(74) Representative: Cabinet Beau de Loménie

(56) References cited:
- EP-A1- 2 826 658
- WO-A1-2013/062574
- JP-A- H08 268 105
- JP-A- 2000 094 984
- JP-A- 2009 227 098

## Description

### TECHNICAL FIELD

This invention relates to a work vehicle.

### BACKGROUND ART

[1] Conventionally, as a work vehicle, there is known e.g. a work vehicle disclosed in Patent Document 1 (Japanese Unexamined Patent Application No. 2018-184168 Publication Document). The work vehicle disclosed in Patent Document 1 includes an engine ("an engine (E)" in the document), an openable/closable hood housing the engine ("a hood (7)" in the document), and a start commanding section for commanding start of the engine ("a key switch (16)" in the document). WO 2013/062574 discloses a work vehicle with a mower between the front and rear wheels. Documents EP 2 826 658 and JP 2000 94984 are also known and disclose vehicles having a switch for detecting the closure state of the vehicle bonnet.
[2] Conventionally, as a work vehicle, there is known e.g. a work vehicle disclosed in Patent Document 2 (Japanese Unexamined Patent Application No. 2018-34679 Publication Document). The work vehicle disclosed in Patent Document 2 includes an engine ("an engine (E)" in the document) mounted to a front portion of a machine body frame ("a machine body frame (1)" in the document) and a hood pivotally openable/closable about a front pivot and housing the engine ("a hood (3)" in the document).

### SUMMARY OF THE INVENTION

### PROBLEMS TO BE SOLVED BY INVENTION

[1] A problem corresponding to Background Art [1] is as follows.
In the case of the work vehicle disclosed in Patent Document 1, if the engine is started with the hood being opened, there is a risk of exhaust gas of the engine spreading over the inner face portion of the hood.

In view of the above, there is a need for a work vehicle that inhibits starting of an engine when a hood is opened.

### SOLUTIONS

[1] A solution addressing to the problem [1] is as recited by appended claim 1. Particularly, such a work vehicle comprises:
   an engine;
   an openable/closable hood housing the engine;
   a detection mechanism for detecting an opened/closed state of the hood;
   a start commanding section for commanding start of the engine; and
   a control section for controlling the engine;
   wherein the control section does not start the engine against a command if any from the start commanding section, if a closed state of the hood is not detected by the detection mechanism.

With this characterizing feature, when the hood is not closed, even if there is a command issued from the start commanding section, the engine is not started. Thus, the engine is not started with the hood being under its opened state.

Further, in the present invention:
the hood is configured to be pivotally openable/closable about a front pivot; and
the detection mechanism is provided at a portion corresponding to a rear portion of the hood.

With this characterizing feature, the opening degree of the hood is greater at its rear portion than at its front portion. And, when the detection mechanism detects the opened/closed state of the rear portion of the hood, the opened/closed state of the hood can be detected accurately by the detection mechanism even when the hood is half-closed.

Further, in the present invention, preferably, the detection mechanism includes:
a detected portion provided at a rear portion of the hood;
a pivotal member pivotable about a pivot axis extending along the horizontal direction and subjected to a pressing action from above by the detected portion in association with a pivotal movement of the hood toward the closing side; and
a detection switch configured to detect the pivotal member being located at a closing position corresponding to the closed state of the hood.

With this characterizing feature, in association with a pivotal movement of the hood toward the closing side, the detected portion applies a pressing action to the pivotal member from above, and the detection switch detects the pivotal member being located at the closing position. With this, the detection mechanism can be constituted of a simple mechanism.

Further, in the present invention, preferably, the detection mechanism includes an urging member configured to urgingly pivot the pivotal member about the pivot axis to the side opposite to the closing position.

With this characterizing feature, the pivotal member is urged by the urging member to pivot to the opposite side to the closing position. With this, an erroneous operation of the pivotal member can be prevented so that the pivotal member may not be located at the closing position when the detected portion is not applying a pressing action on the pivotal member.

Further, in the present invention, preferably:
there is provided a lock mechanism for position-maintaining the hood under the closed state; and
the detection mechanism is disposed at a portion adjacent to the lock mechanism.

With this characterizing feature, the detection mechanism detects the opened/closed state of the hood at a portion of the hood which is position-maintained by the lock mechanism. With this, the opened/closed state of the hood can be detected accurately by the detection mechanism under a stable state of the hood.

Further, in the present invention, preferably,
the lock mechanism includes:
an engaged portion provided at a rear portion of the hood;
a hook configured to be pivotable about a pivot axis extending parallel with the pivot axis and subjected to a pressing action from above by the engaged portion in association with a pivotal movement of the hood toward the closing side to be engaged with the engaged portion; and
the detected portion and the engaged portion are identical to each other.

With the above-described characterizing feature, through commonization of parts, the number of parts can be suppressed. Further, the detection mechanism and the lock mechanism can be disposed in close vicinity to each other.

### BRIEF DESCRIPTION OF THE DRAWINGS

Fig. 1 is a view relating to a first embodiment (same is true with the views up to Fig.8), which is a left side view showing a riding grass cutting machine,
Fig. 2 is a plan view showing the riding grass cutting machine,
Fig. 3 is a rear view showing a lock mechanism and a detection mechanism,
Fig. 4 is a view showing a control arrangement,
Fig. 5 is a rear view showing the lock mechanism and the detection mechanism, which is a rear view showing a state prior to closing of a hood,
Fig. 6 is a rear view showing the lock mechanism and the detection mechanism, which is a rear view showing a state when the hood is closed,
Fig. 7 is a rear view showing the lock mechanism and the detection mechanism, which is a rear view showing a state when the hood is pivoted from the closed state to the opening side,
Fig. 8 is a left side view showing an oil line arrangement for a power steering device,
Fig. 9 is a view relating to an example (same is true to drawings up to Fig. 15), which is a left side view showing a riding grass cutting machine,
Fig. 10 is a plan view showing the riding grass cutting machine,
Fig. 11 is an exploded front view showing an arrangement of a front portion of a hood,
Fig. 12 is a front view showing the arrangement of the front portion of the hood,
Fig. 13 is a left side view in section showing the arrangement of the front portion of the hood,
Fig. 14 is a left side view in section showing the arrangement of the front portion of the hood when the hood is pivoted to the opening side, and
Fig. 15 is a left side view showing an exhaust arrangement of a muffler.

### EMBODIMENTS

### [First Embodiment]

Next, a first embodiment will be explained.

Embodiments for embodying the present invention will be explained with reference to the accompanying drawings. In the following explanation, the direction of arrow F will be defined as "machine body front side", the direction of arrow B will be defined as "machine body rear side", the direction of arrow L will be defined as "machine body left side" and the direction of arrow R will be defined as "machine body right side", respectively.

### [General Arrangement of Riding Grass Cutting Machine]

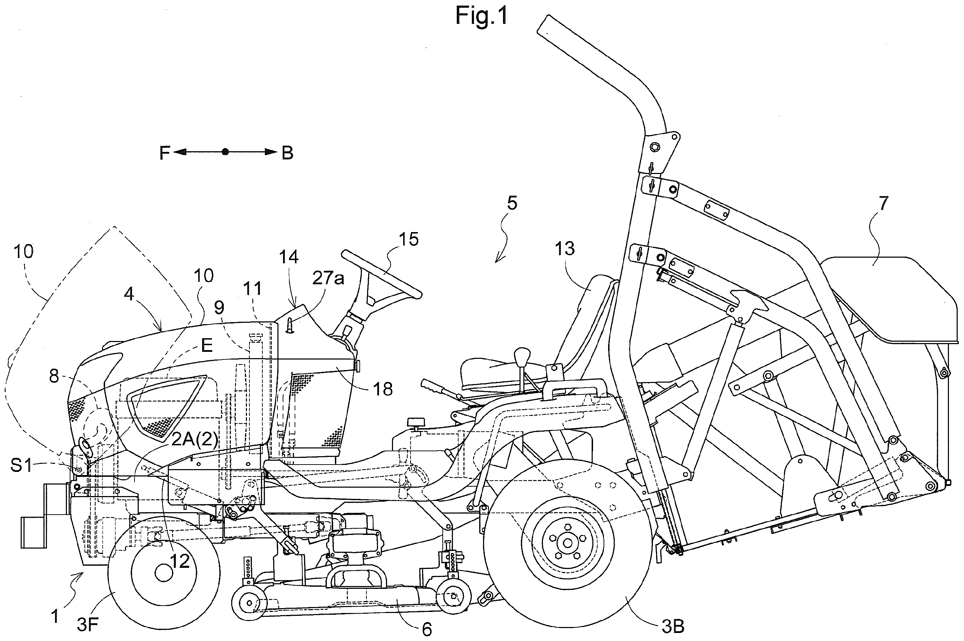

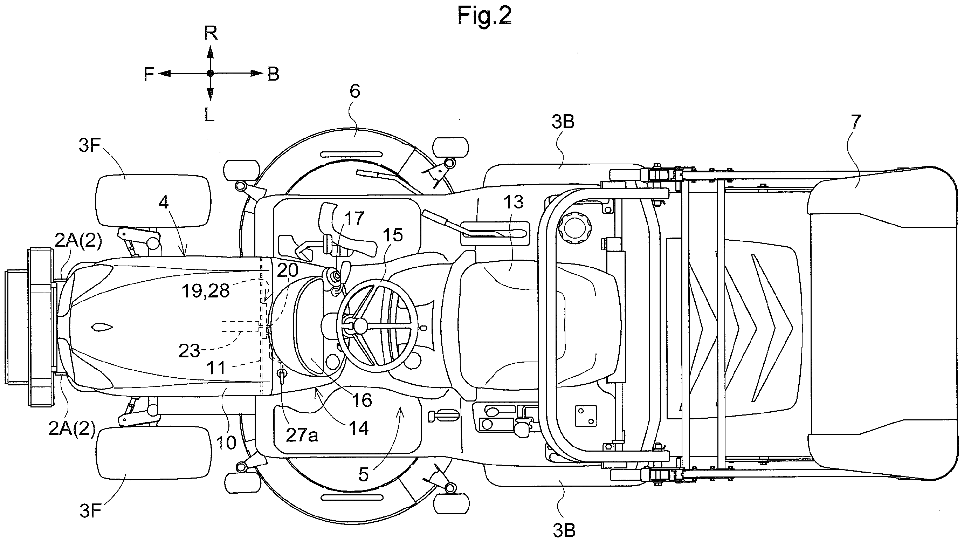

Fig. 1 and Fig. 2 show a riding grass cutting machine (corresponding to a "work vehicle" relating to the present invention). This riding grass cutting machine includes a traveling machine body 1. The traveling machine body 1 includes a machine body frame 2, a pair of left and right steerable front wheels 3F and a pair of left and right drivable rear wheels 3B. The machine body frame 2 includes a pair of left and right main frames 2A extending along the machine body front/rear direction. At a front portion of the traveling machine body 1, an engine section 4 is provided. Rearwardly of this engine section 4, a driving section 5 is provided. Under the traveling machine body 1 and between the front wheels 3F and the rear wheels 3B, a mower 6 (corresponding to an "implement" relating to the present invention) is provided. To a rear portion of the traveling machine body 1, there is supported a grass collecting container 7 for collecting cut grass pieces from the mower 6.

The engine section 4 includes an engine E, a muffler 8 for exhausting exhaust gas of the engine E, a radiator 9 for discharging heat of engine cooling water, and a hood 10 housing the engine E, etc. The engine E is mounted to a front portion of the machine body frame 2. At the outer circumferential portion of the radiator 9, there is provided a plate-like frame 11 for closing a gap formed around the radiator 9. The hood 10 is configured to be pivotally opened/closed about a front pivot S1. A damper 12 is provided for urgingly pivoting the hood 10 toward its opening side.

The driving section 5 includes a driver's seat 13 and a maneuvering tower 14. The maneuvering tower 14 includes a steering wheel 15, a meter panel 16, a key switch 17 (corresponding to a "start commanding section" relating to the present invention) for commanding starting of the engine E, and a panel 18 for covering a column (not shown), etc. which supports the steering wheel 15.

### [Lock Mechanism]

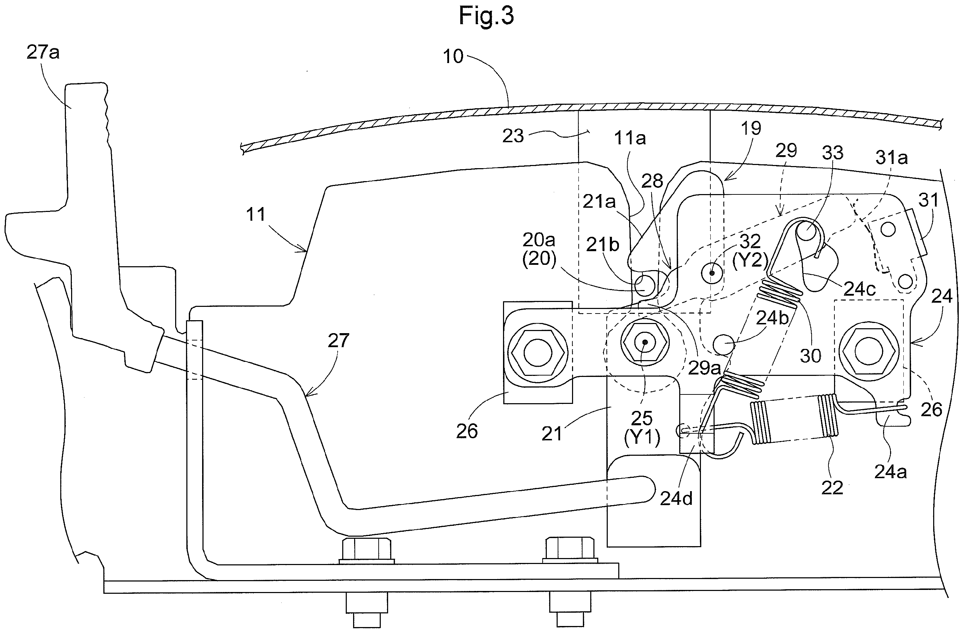

As shown in Fig. 3, there is provided a lock mechanism 19 for position-maintaining the hood 10 under its closed state. This lock mechanism 19 is provided at a portion corresponding to a rear portion of the hood 10. The lock mechanism 19 includes a shaft 20 (corresponding to an "engaged portion" relating to the present invention), a hook 21, and a spring 22.

The shaft 20 is provided at a rear portion of the hood 10. The shaft 20, inside the hood 10, is supported to a ceiling plate of the hood 10 via a stay 23. The shaft 20 includes an action portion 20a extending toward the rear side when the hood 10 is closed. At an upper portion of the frame 11, there is formed an opening 11a which is opened toward the upper side so as to allow entrance of the action portion 20a therein in association with a pivotal movement of the hood 10 to the closing side.

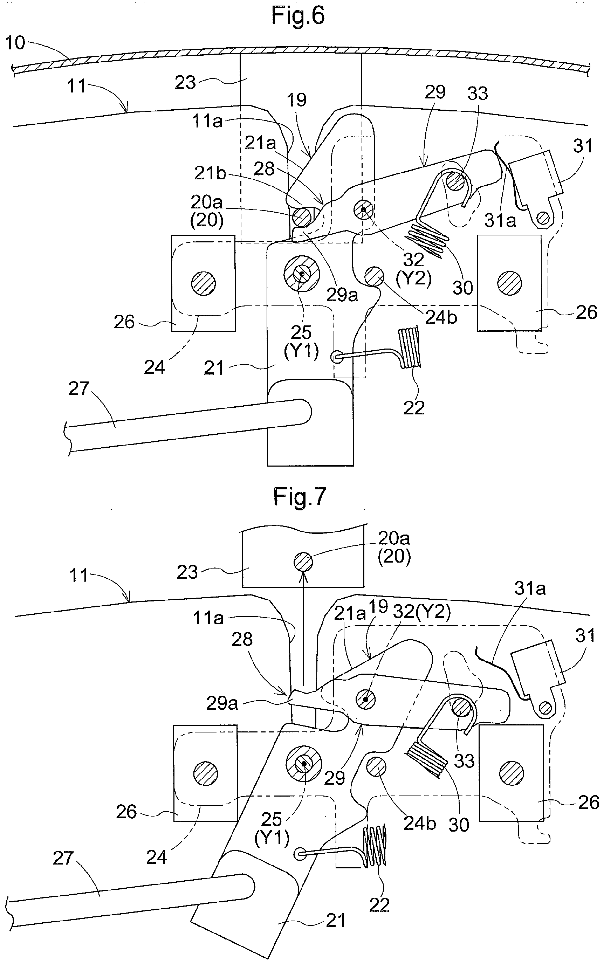

The hook 21 is arranged to be pivotable about a pivot axis Y1 (a pivot axis parallel with a pivot axis Y2 which will be described later) between a locked position (see Fig. 3) in which the hook 21 is engaged with the action portion 20a and a released position (see Fig. 7) in which the hook 21 is not engaged with the action portion 20a. The pivot axis Y1 is a pivot axis that extending along the horizontal direction in the machine body front/rear direction. The hook 21 is disposed rearwardly of the frame 11. The hook 21 is provided with an acted portion 21a which is subjected to a pressing action by the action portion 20a from the upper side in association with a pivotal movement of the hood 10 toward the closing side. In the hook 21, there is formed an engagement groove 21b engageable with the action portion 20a.

A support plate 24 is provided for supporting the hook 21, etc. This support plate 21 is disposed rearwardly of the hook 21. The hook 21 is supported to a support shaft 25 to be pivotable about the pivot axis Y1 and also is supported to the support plate 24 via the support shaft 25. The support plate 24 is supported to the frame 11 via left and right stays 26.

The spring 22 urges the hook 21 for its pivotal movement about the pivot axis Y1 toward the locked position side. This spring 22 is provided between the hook 21 and the support plate 24. The support plate 24 has a hook portion 24a to which the spring 22 is hooked.

At a front face portion of the support plate 24, there is provided a positioning portion 24b for fixing the hook 21 in position at the locked position. The left stay 26 functions also as a positioning member for positioning the hook 21 at the released position (see Fig. 7). To the hook 21, there is connected a release lever 27 for pivotally operating the hook 21 about the pivot axis Y1 toward the released position in order to release the engagement of the hook 21 with the action portion 20a. An end portion of the release lever 27 opposite to the hook 21, a handgrip 27a is provided. This handgrip 27a protrudes upwards from the upper portion of the panel 18.

### [Detection Mechanism]

As shown in Fig. 3, a detection mechanism 28 is provided for detecting an opened or closed state of the hood 10. This detection mechanism 28 is provided at a portion corresponding to the rear portion of the hood 10. The detection mechanism 28 includes a shaft 20 (corresponding to a "detected portion" relating to the present invention), a pivot arm 29 (corresponding to a "pivotal member" relating to the present invention), a spring 30 (corresponding to an "urging member" relating to the present invention), and a detection switch 31. Namely, the "detected portion" relating to the present invention and the "engaged portion" relating to the present invention are same (same shaft 20).

The pivot arm 29 is configured to be pivotable about the pivot axis Y2. This pivot axis Y2 is a pivot axis that extends along the horizontal direction in the machine body front/rear direction. The pivot arm 29 is disposed between the hook 21 and the support plate 24. Namely, the detection mechanism 28 is disposed at a portion adjacent the lock mechanism 19. The pivot arm 29 is supported to a support shaft 32 to be pivotable about the pivot axis Y2 and also supported to the support plate 24 via the support shaft 32. The pivot arm 29 includes an acted portion 29a subjected to a pressing action of the action portion 20a from the above, in association with a pivotal movement of the hood 10 toward the closing side.

At a portion of the pivot arm 29 opposite to the acted portion 29a relative to the pivot axis Y2, there is provided a pin 33 extending along the front/rear direction. The support plate 24 defines a slot 24c through which the pin 33 is inserted. The slot 24c has an arcuate portion centering about the pivot axis Y2.

Namely, the pivot arm 29 is arranged to be pivotable about the pivot axis Y2 within an angular range in which the pin 33 is movable within the slot 24c. Here, regarding pivotal positions of the pivot arm 29, a position thereof when the pin 33 has reached the lower end of the slot 24c (the state of the pin 33 coming into contact with a portion along the lower end portion of the slot 24c of the support plate 24) will be referred to as a position corresponding to the state of the action portion 20a not acting on the pivot arm 29 (the acted portion 29a) (this position will be referred to as "initial positon" hereinafter, see Fig. 7), whereas a position thereof when the pin 33 has reached the upper end portion of the slot 24c (the state of the pin 33 coming into contact with a portion along the upper end portion of the slot 24c of the support plate 24) will be referred to as a position corresponding to the closed state of the hood 10 (this position will be referred to as a "closing position" hereinafter, see Fig. 3).

The spring 30 urges the pivot arm 29 for its pivoting about the pivot axis Y2, opposite to the closed position (namely, toward the initial position). This spring 30 is disposed rearwardly of the support plate 24. The spring 30 is provided between the pin 33 and the support plate 24. The support plate 24 is provided with a hook portion 24d to which the spring 30 is to be hooked.

The detection switch 31 detects the pivot arm 29 being located at the closing position. The detection switch 31 is disposed between the frame 11 and the support plate 24. The detection switch 31 is supported to the support plate 24 as the detection switch 31 is located adjacent the end portion (right end portion) opposite the acted portion 29a of the pivot arm 29. The detection switch 31 includes a lever 31a.

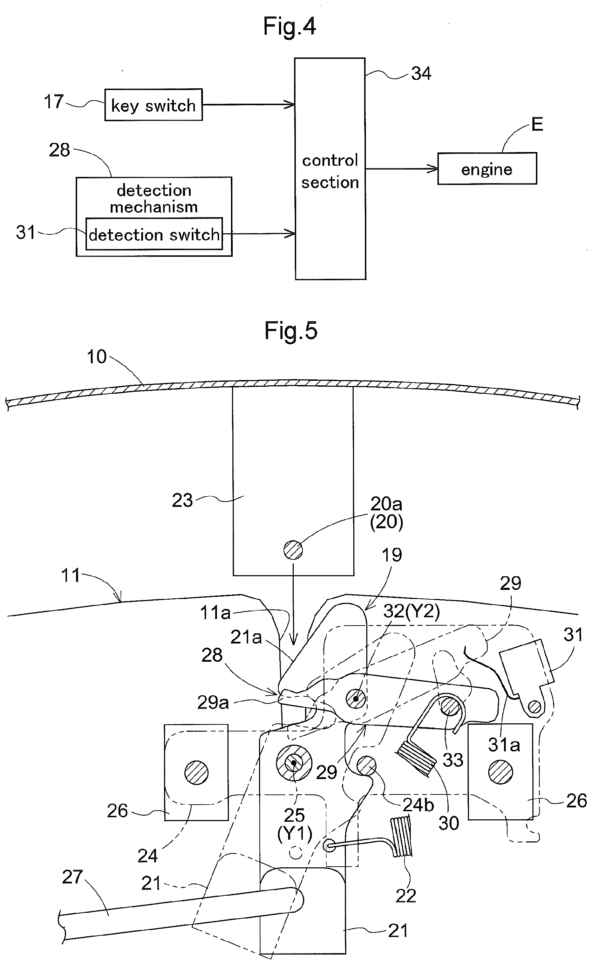

Fig. 4 shows a control arrangement. This control arrangement includes a control section 34, the engine E, the key switch 17 and the detection switch 31. The control section 34 is configured to be capable of receiving a signal from the key switch 17, a signal from the detection switch 31, and other signals. The control section 34 starts the engine E in response to a command from the key switch 17, if the detection mechanism 28 detects the hood 10 being under the closed state. On the other hand, in case the detection mechanism 28 does not detect the hood 10 being under the closed state, the control section 24 does not start the engine E against the command from the key switch 17.

### [Mode of Operations of Lock Mechanism and Detection Mechanism]

As shown in Fig. 5, when the hood 10 is pivoted to the closing side, the action portion 20a enters the opening 11a to apply a pressing action from above to the acted portion 21a of the hook 21. With this, the hook 21 is pivoted about the pivot axis Y1 toward the releasing position side against the urging force of the spring 22.

Subsequently, the action portion 20a applies a pressing action from above onto the acted portion 29a of the pivot arm 29. With this, the pivot arm 29 is pivoted about the pivot axis Y2 to the closing position against the urging force of the spring 30.

And, when the action portion 20a is lowered to the height position corresponding to the engagement groove 21b of the hook 21, under the urging force of the spring 22, the hook 21 is pivoted toward the locked position side about the pivot axis Y1.

Finally, as shown in Fig. 6, the hook 21 will come into engagement with the action portion 20a via the engagement groove 21b and will be fixed position at the locked position by the positioning portion 24b. Namely, the hood 10 will be maintained under the closed state by the lock mechanism 19.

And, under the above-descried state in which the hood 10 is position-maintained under the closed state by the lock mechanism 19, the detection switch 31 is to detect that the pivot arm 29 is located at the closing position as this pivot arm 29 applies a pressing action onto the lever 31a of the detection switch 31. Namely, the closed state of the hood 10 is detected by the detection mechanism 28.

Here, as described above, the control section 34 starts the engine E in response to a command from the key switch 17, if the detection mechanism 28 detects the hood 10 being under the closed state.

Thereafter, as shown in Fig. 7, when the hook 21 is pivotally operated by the release lever 27 about the pivot axis Y1 to the releasing position against the urging force of the spring 22, the engagement of the hook 21 with the action portion 20a will be released. Namely, the position maintenance of the hood 10 under the closed state by the lock mechanism 19 will be released.

And, under the state of release of the position maintenance of the hood 10 under the closed state by the lock mechanism 19, if the hood 10 is pivoted toward the opening side, the action portion 20a will be moved upward away from the acted portion 29a of the pivot arm 29. With this, the pivot arm 29 will be pivoted about the pivot axis Y2 to the initial position under the urging force of the spring 30, and the pivot arm 29 will be moved away from the lever 31a of the detection switch 31. Namely, the detection mechanism 28 will no longer detect the pivot arm 29 being located at the closing position.

Here, as described above, the control section 34 does not start the engine E against the command from the key switch 17, if the detection mechanism 28 does not detect the hood 10 being under the closed state.

### [Oil Line Arrangement for Power Steering Device]

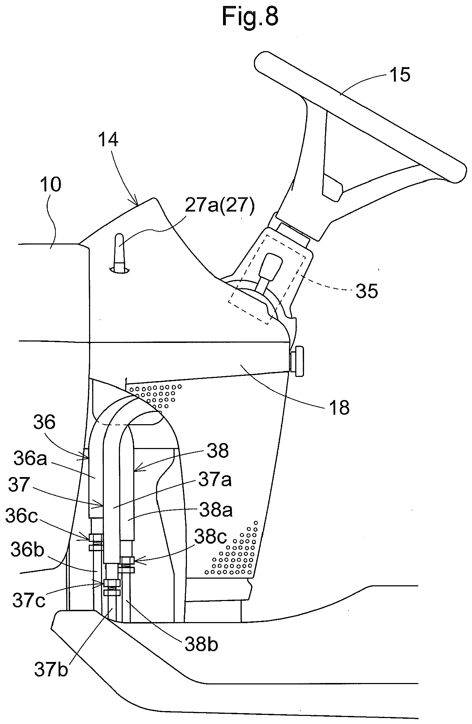

As shown in Fig. 8, between the power steering device 35 for the steering wheel 15 and a hydraulic device (not shown), there are provided a plurality of pipe-like members. The plurality of pipe-like members include a first pipe-like member 36, a second pipe-like member 37, and a third pipe-like member 38. The first pipe-like member 36 includes a first hydraulic hose 36a made of soft material (e.g. made of rubber), and a first hydraulic pipe 36b made of hard material (e.g. made of metal). The first hydraulic hose 36a and the first hydraulic pipe 36b are connected to each other via a first joint 36c. The second pipe-like member 37 includes a second hydraulic hose 37a made of soft material (e.g. made of rubber), and a second hydraulic pipe 37b made of hard material (e.g. made of metal). The second hydraulic hose 37a and the second hydraulic pipe 37b are connected to each other via a second joint 37c. The third pipe-like member 38 includes a third hydraulic hose 38a made of soft material (e.g. made of rubber), and a third hydraulic pipe 38b made of hard material (e.g. made of metal). The third hydraulic hose 38a and the third hydraulic pipe 38b are connected to each other via a third joint 38c.

The first joint 36c, the second joint 37c and the third joint 38c are disposed inside the panel 18. The first joint 36c, the second joint 37c and the third joint 38c are disposed with respective vertical positions thereof relative to each other being offset from each other. With this arrangement, when the first joint 36c, the second joint 37c and the third joint 38c are to be fastened or loosened in the limited space available inside the panel 18 for instance, the adjacent ones of the first joint 36c, the second joint 37c and the third joint 38c will not interfere with each other, and a space for inserting a tool can be secured.

### [Further Embodiments of First Embodiment]

(1) In the foregoing embodiment, the hood 10 is configured to be pivotally opened/closed about the front pivot S1. However, the hood 10 may be configured to be pivotably opened/closed about a rear pivot.
(2) In the foregoing embodiment, the detection mechanism 28 is provided at a portion corresponding to the rear portion of the hood 10. However, the detection mechanism 28 may be provided at a portion corresponding to a front portion of the hood 10. In particular, in the case of the arrangement of the above-described embodiment (1) in which the hood 10 is configured to be pivotally opened/closed about the rear pivot, it will be advantageous if the detection mechanism 28 is provided at a portion corresponding to the front portion of the hood 10.
(3) In the foregoing embodiment, the detection mechanism 28 includes the shaft 20, the pivot arm 29, the spring 30 and the detection switch 31. However, the detection mechanism 28 is not limited to the arrangement relating to the foregoing embodiment.
(4) In the foregoing embodiment, the lock mechanism 19 includes the shaft 20, the hook 21 and the spring 22. However, the lock mechanism 19 is not limited to the arrangement relating to the foregoing embodiment.
(5) In the foregoing embodiment, the detection mechanism 28 is disposed at a portion adjacent the lock mechanism 19. However, the detection mechanism 28 may be disposed at a portion other than the portion adjacent the lock mechanism 19.
(6) In the foregoing embodiment, the "detected portion" and the "engaged portion" relating to the present invention are identical to (same) each other (the shaft 20). However, the "detected portion" and the "engaged portion" relating to the present invention may not be identical to each other.
(7) The present invention is applicable not only to the riding grass cutting machine, but also to a tractor having an implement mounted at a rear portion of the machine body.
(8) Incidentally, the present invention is not limited to the foregoing embodiment or the other embodiments described above, but various modifications thereof are possible.

Next, another example of a work vehicle will be explained.

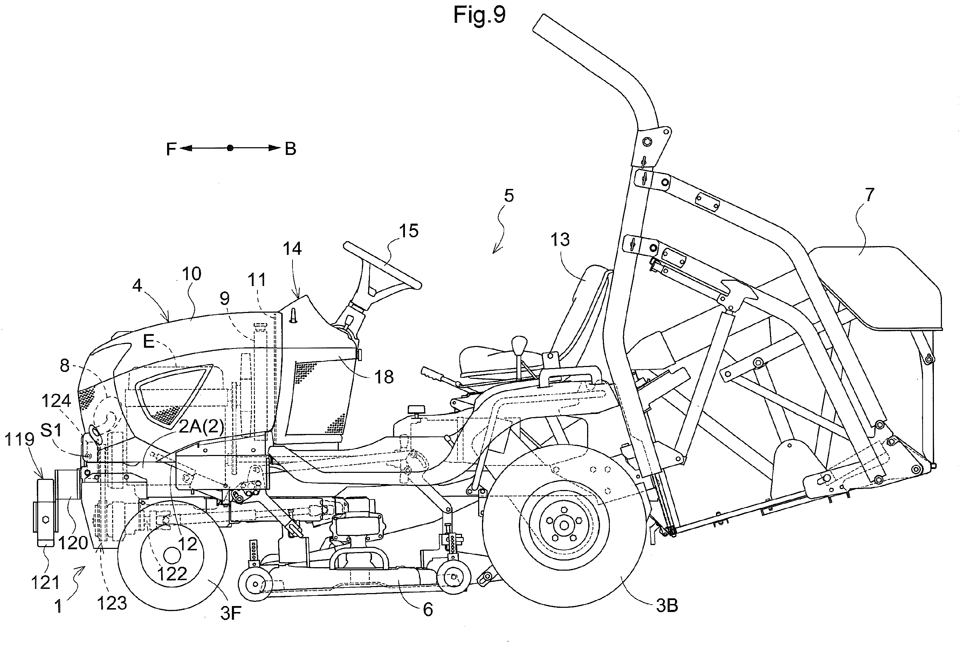

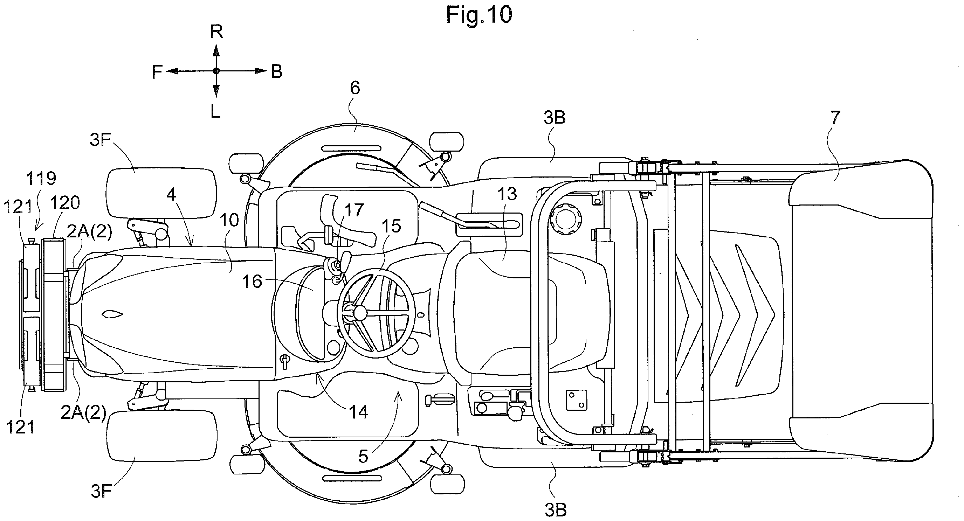

As shown in Fig. 9 and Fig 10, at a front end portion of a traveling machine body 1, a weight unit 119 is provided. This weight unit 119 includes a bracket 120 provided at a front end portion of a machine body frame 2 and left and right front weights 121 detachably attached to the bracket 120.

A PTO (power take-off) shaft 122 is provided for taking off power of an engine E for driving a mower 6. Between an output shaft (not shown) of the engine E and the PTO shaft 122, there is provided a belt transmission mechanism 123 for transmitting power of the output shaft to the PTO shaft 122. As the power of the output shaft is transmitted by the belt transmission mechanism 123 to the PTO shaft 122, the mower 6 is driven.

At the forward vicinity of the engine E, there is provided a clutch device 124 for engaging/disengaging power transmission to the mower 6. The clutch device 124, as being positioned forwardly of the belt transmission mechanism 123, is connected to a font end portion of the output shaft. The clutch device 124 is constituted of an electromagnetic clutch. The clutch device 124 is configured to be switchable between a state (engaged state) for transmitting the power of the output shaft to the belt transmission mechanism 123 and a state (disengaged state) for not transmitting the power of the output shaft to the belt transmission mechanism 123.

### [Hood]

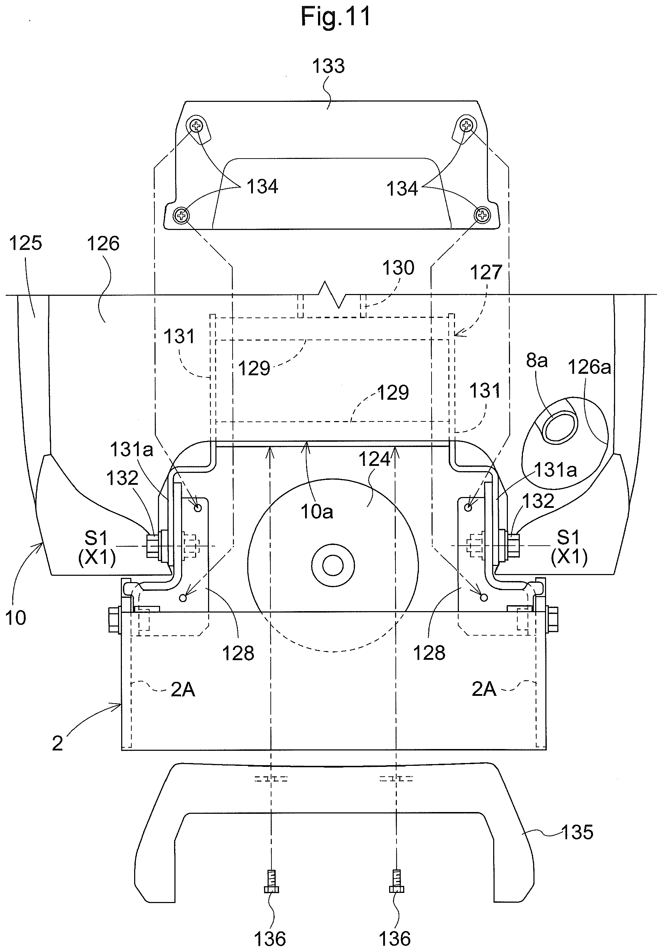

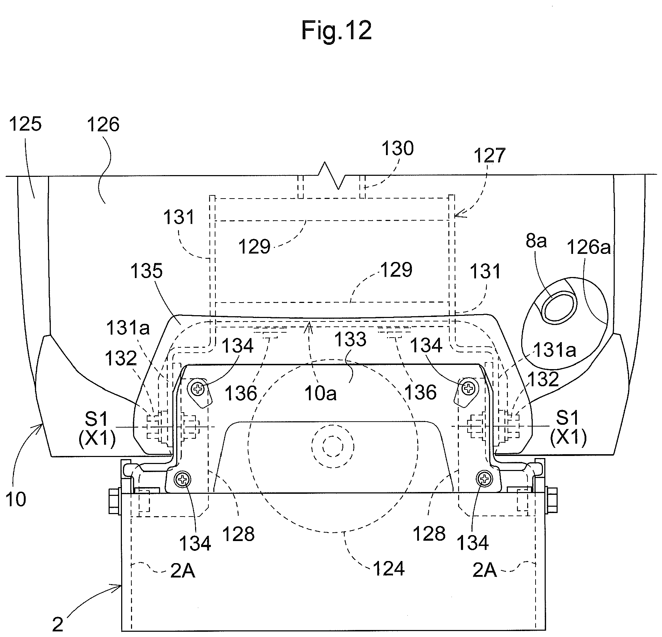

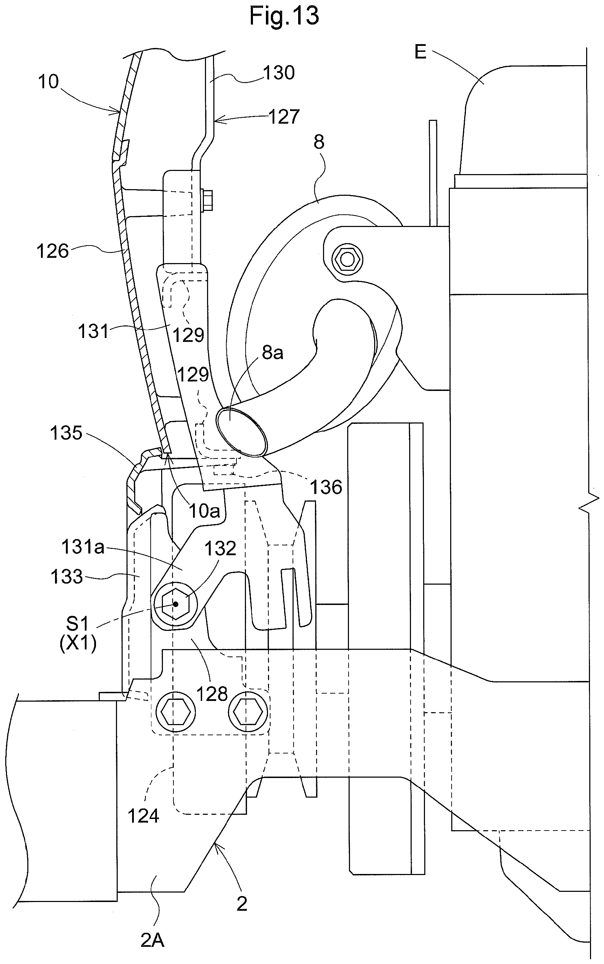

As shown in Figs. 11 through 13, the hood 10 includes a hood body portion 125 and a front grill 126. The front grill 126 is attached to a front portion of the hood body portion 125. In the front grill 126, there are formed many ventilation holes (not shown). At a left lower portion of the front grill 126, there is formed a hole 126a for exposing an exhaust pipe 8a for the muffler 8 to the outside.

Between an upper portion and a lower portion of the front portion of the hood body portion 125, a support member 127 is provided. To this support member 127, the front grill 126, etc. are supported. At the front end portions of the left and right main frames 2A, there are provided left and right stays 128 respectively. The hood 10 is supported via the support member 127 to the left and right stays 128 to be pivotable about a pivot axis X1. This pivot axis X1 is a pivot axis extending along the machine body left/right direction.

The support member 127 includes upper and lower horizontal stays 129 extending along the machine body left/right direction, an upper vertical stay 130 connected to the upper horizontal stay 129 and extending upwards and left and right lower vertical stays 131 connected to the left and right end portions of the upper and lower horizontal stays 129 and extending downwards. The left and right lower vertical stays 131 are supported to the left and right stays 128 via left and right bolts 132 to be pivotable about the pivot axis X1. At the lower end portions of the lower vertical stays 131, support portions 131a are formed. The support portions 131a are placed in abutment against the stays 128 from the lateral outer side and fixed under this state with the bolts 132. The bolts 132 are inserted into the support portions 131a from the lateral outer side.

At a front lower portion of the hood 10, there is formed an opening 10a which is opened to the lower side. The opening 10a is formed between the hood body portion 125 and the front grill 126. The opening 10a is overlapped with the clutch device 124 as seen in a front view. The opening 10a is formed to extend with a width greater than the lateral width of the clutch device 124 and to extend to a position higher than the upper end of the clutch device 124. The support portions 131a extend through the opening 10a to the outside of the hood 10.

A cover member 133 is provided to cover the opening 10a as being disengaged from the hood 10. The cover member 133 is supported to the left and right stays 128. The left end portion of the cover member 133 is placed in abutment against the left stay 128 from the front side and fixed under this state with a screw 134. The right end portion of the cover member 133 is placed in abutment against the right stay 128 from the front side and fixed under this state with a screw 134. The screws 134 are inserted to the cover member 133 from the front side thereof.

At a portion of the hood 10 along the opening 10a, a frame member 135 is attached. The frame member 135 has an approximately portal shape as seen in a front view. A gap formed between the portion of the hood 10 along the opening 10a and the cover member 133 is closed by the frame member 135. The frame member 135 is fixed to the lower horizontal stays 129 with bolts 136.

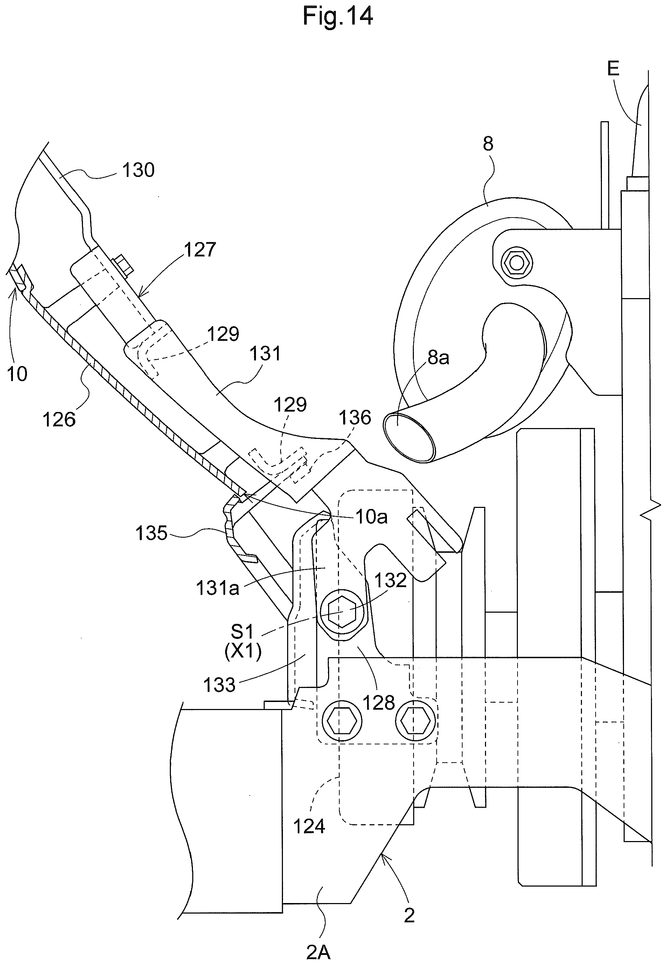

As shown in Fig. 14, when the hood 10 is pivotally opened/closed, the cover member 133 is not pivoted together with the hood 10, but will remain on the side of the machine body frame 2. And, when the hood 10 is pivotally opened/closed, the clutch device 124 enters the opening 10a, so that the front lower portion of the hood 10 does not interfere with the clutch device 124.

### [Exhaust Arrangement of Muffler]

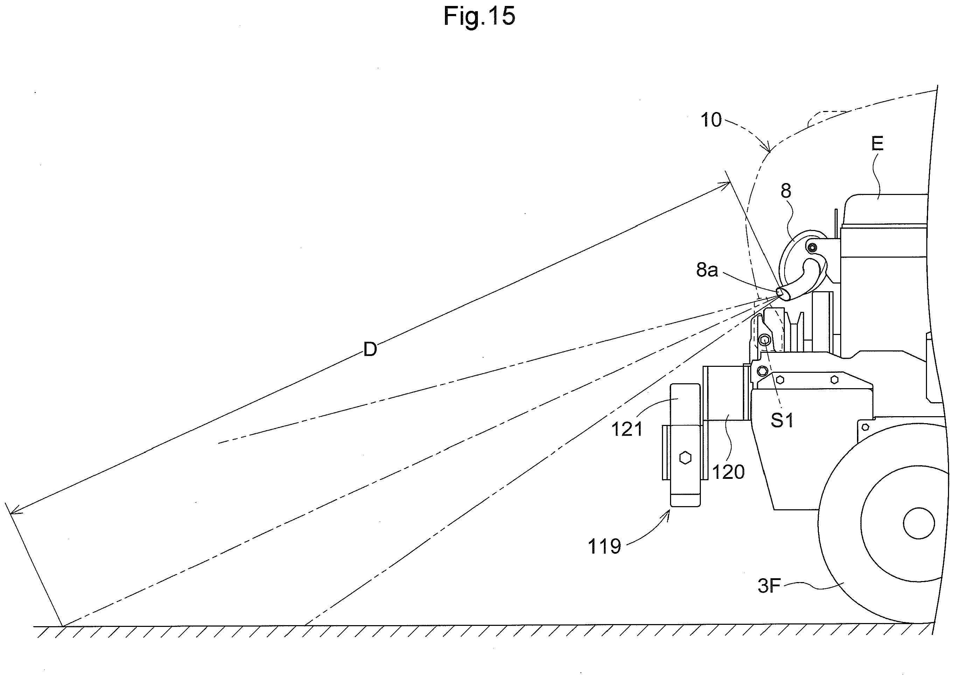

As shown in Fig. 15, the exhaust pipe 8a extends obliquely from the left side portion of the muffler 8 toward the front lower side. The exhaust pipe 8a is caused to extend as long as possible so as to prevent exhaust gas from reaching the front grill 126. With this arrangement, it is possible to prevent the exhaust gas from falling on the front grill 126, thus soiling or damaging this front grill 126.

In order to prevent the exhaust gas from falling on the front weights 121 and/or the bracket 120, the inclination of the exhaust pipe 8a is set so as to maximize a distance D from the exhaust opening end of the exhaust pipe 8a to the ground surface. With this arrangement, it is possible to prevent the exhaust gas from falling on the front weights 121 and/or the bracket 120, thus soiling or damaging the same. Further, with the increase of the distance D from the exhaust opening end of the exhaust pipe 8a to the ground surface, the temperature of the exhaust gas in the vicinity of the ground surface is lowered, whereby heat influence to e.g. lawn on the ground surface can be reduced.

(1) In the foregoing example, forwardly adjacent the engine E, the clutch device 124 is provided. However, forwardly adjacent the engine E, the clutch device 124 may not be provided. In this case, forwardly adjacent the engine E, a device other than the clutch device 124 may be provided.
(2) In the foregoing example, at the portion of the hood 10 along the opening 10a, the frame member 135 is attached. However, at the portion of the hood 10 along the opening 10a, the frame member 135 may not be attached.
(3) In the foregoing example, the cover member 133 is supported to the stays 128. However, the cover member 133 may be supported to a member other than the stays 128.
(4) The present example is applicable not only to the riding grass cutting machine, but also to a tractor having an implement mounted at a rear portion of the machine body.

### DESCRIPTION OF SIGNS

- 2:: machine body frame
- 6:: mower (implement)
- 10:: hood
- 10a:: opening
- 17:: key switch (start commanding section)
- 19:: lock mechanism
- 20:: shaft (detected portion, engaged portion)
- 21:: hook
- 28:: detection mechanism
- 29:: pivot arm (pivotal member)
- 30:: spring (urging member)
- 31:: detection switch
- 34:: control section
- 124:: clutch device
- 126:: front grill
- 128:: stay
- 133:: cover member
- 135:: frame member
- E:: engine
- S1:: front pivot
- Y1:: pivot axis
- Y2:: pivot axis

## Claims

1. A work vehicle comprising:
a pair of left and right front wheels (3F);
a pair of left and right rear wheels (3B);
a mower (6) between the front wheels (3F) and the rear wheels (3B);
an engine (E);
an openable/closable hood (10) pivotally openable/closable about a front pivot (S1) and housing the engine (E);
a detection mechanism (28) provided at a portion corresponding to a rear portion of the hood (10) for detecting an opened/closed state of the hood (10);
a start commanding section (17) for commanding start of the engine (E); and
a control section (34) for controlling the engine (E);
wherein the control section (34) is configured not to start the engine (E) against a command, if any, from the start commanding section (17), if a closed state of the hood (10) is not detected by the detection mechanism (28).

2. The work vehicle of claim 1, wherein the detection mechanism (28) includes:
a detected portion (20) provided at a rear portion of the hood (10);
a pivotal member (29) pivotable about a pivot axis (Y2) extending along the horizontal direction and subjected to a pressing action from above by the detected portion (20) in association with a pivotal movement of the hood (10) toward the closing side; and
a detection switch (31) configured to detect the pivotal member (29) being located at a closing position corresponding to the closed state of the hood (10).

3. The work vehicle of claim 2, wherein the detection mechanism (28) includes an urging member (30) configured to urgingly pivot the pivotal member (29) about the pivot axis (Y2) to the side opposite to the closing position.

4. The work vehicle of claim 2 or 3, wherein:
there is provided a lock mechanism (19) for position-maintaining the hood (10) under the closed state; and
the detection mechanism (28) is disposed at a portion adjacent to the lock mechanism (19).

5. The work vehicle of claim 4, wherein:
the lock mechanism (19) includes:
an engaged portion (20) provided at a rear portion of the hood (10);
a hook (21) configured to be pivotable about a pivot axis (Y1) extending parallel with the pivot axis (Y2) and subjected to a pressing action from above by the engaged portion (20) in association with a pivotal movement of the hood (10) toward the closing side to be engaged with the engaged portion (20); and
the detected portion (20) and the engaged portion (20) are identical to each other.

## Patentansprüche

1. Arbeitsfahrzeug, umfassend:
ein Paar von linken und rechten Vorderrädern (3F),
ein Paar von linken und rechten Hinterrädern (3B),
eine Mähmaschine (6) zwischen den Vorderrädern (3F) und den Hinterrädern (3B),
einen Motor (E),
eine öffenbare/schließbare Motorhaube (10), die schwenkbar um einen vorderen Drehpunkt (S1) herum öffenbar/schließbar ist und den Motor (E) aufnimmt,
einen Erfassungsmechanismus (28), der an einem Abschnitt entsprechend einem hinteren Abschnitt der Motorhaube (10) vorgesehen ist, um einen offenen/geschlossenen Zustand der Motorhaube (10) zu erfassen,
eine Startbefehlssektion (17) zum Befehlen des Starts des Motors (E), und
eine Steuersektion (34) zum Steuern des Motors (E),
wobei die Steuersektion (34) dazu ausgestaltet ist, den Motor (E) gegenüber einem Befehl nicht, gegebenenfalls, von der Startbefehlssektion (17) her zu starten, falls ein geschlossener Zustand der Motorhaube (10) von dem Erfassungsmechanismus (28) nicht erfasst wird.

2. Arbeitsfahrzeug nach Anspruch 1, wobei der Erfassungsmechanismus (28) beinhaltet:
einen erfassten Abschnitt (20), der an einem hinteren Abschnitt der Motorhaube (10) vorgesehen ist,
ein Schwenkelement (29), das um eine Schwenkachse (Y2) herum schwenkbar ist, die sich entlang der horizontalen Richtung erstreckt, und einer Presswirkung von oben durch den erfassten Abschnitt (20) in Verbindung mit einer Schwenkbewegung der Motorhaube (10) zu der Schließseite hin ausgesetzt ist, und
einen Erfassungsschalter (31), der dazu ausgestaltet ist, das Schwenkelement (29) zu erfassen, das sich in einer Schließposition entsprechend dem geschlossenen Zustand der Motorhaube (10) befindet.

3. Arbeitsfahrzeug nach Anspruch 2, wobei der Erfassungsmechanismus (28) ein Treibelement (30) beinhaltet, das dazu ausgestaltet ist, das Schwenkelement (29) treibend und die Schwenkachse (Y2) zur der der Schließposition gegenüberliegenden Seite zu schwenken.

4. Arbeitsfahrzeug nach Anspruch 2 oder 3, wobei:
ein Verriegelungsmechanismus (19) zum Positionshalten der Motorhaube (10) in dem geschlossenen Zustand vorgesehen ist, und
der Erfassungsmechanismus (28) an einem Abschnitt angrenzend an den Verriegelungsmechanismus (19) angeordnet ist.

5. Arbeitsfahrzeug nach Anspruch 4, wobei:
der Verriegelungsmechanismus (19) beinhaltet:
einen in Eingriff stehenden Abschnitt (20), der an einem hinteren Abschnitt der Motorhaube (10) vorgesehen ist,
ein Haken (21), der dazu ausgestaltet ist, um eine Schwenkachse (Y1) herum schwenkbar zu sein, die sich parallel zur Schwenkachse (Y2) erstreckt, und einer Presswirkung von oben durch den in Eingriff stehenden Abschnitt (20) in Verbindung mit einer Schwenkbewegung der Motorhaube (10) zu der Schließseite hin ausgesetzt ist, um mit dem in Eingriff stehenden Abschnitt (20) in Eingriff zu kommen, und
der erfasste Abschnitt (20) und der in Eingriff stehende Abschnitt (20) identisch miteinander sind.

## Revendications

1. Véhicule de travail comprenant :
une paire de roues avant gauche et droite (3F) ;
une paire de roues arrière gauche et droite (3B) ;
une tondeuse (6) entre les roues avant (3F) et les roues arrière (3B);
un moteur (E) ;
un capot (10) pouvant s'ouvrir/se fermer, pouvant s'ouvrir/se fermer de manière pivotante autour d'un pivot avant (S1) et logeant le moteur (E) ;
un mécanisme de détection (28) prévu au niveau d'une partie correspondant à une partie arrière du capot (10) pour détecter un état ouvert/fermé du capot (10) ;
une section de commande de démarrage (17) pour commander le démarrage du moteur (E) ; et
une section de commande (34) pour commander le moteur (E) ;
dans lequel la section de commande (34) est configurée pour ne pas démarrer le moteur (E) contre une commande, si elle existe, provenant de la section de commande de démarrage (17), si un état fermé du capot (10) n'est pas détecté par le mécanisme de détection (28).

2. Véhicule de travail selon la revendication 1, dans lequel le mécanisme de détection (28) comprend :
une partie détectée (20) prévue au niveau d'une partie arrière du capot (10) ;
un élément pivotant (29) pouvant pivoter autour d'un axe de pivot (Y2) s'étendant le long de la direction horizontale et soumis à une action de pression provenant du dessus par la partie détectée (20) en association avec un mouvement pivotant du capot (10) vers le côté de fermeture ; et
un commutateur de détection (31) configuré pour détecter l'élément pivotant (29) qui est positionné dans une position de fermeture correspondant à l'état fermé du capot (10).

3. Véhicule de travail selon la revendication 2, dans lequel le mécanisme de détection (28) comprend un élément de sollicitation (30) configuré pour faire pivoter, par sollicitation, l'élément pivotant (29) autour de l'axe de pivot (Y2) vers le côté opposé à la position de fermeture.

4. Véhicule de travail selon la revendication 2 ou 3, dans lequel :
est prévu un mécanisme de verrouillage (19) pour maintenir en position le capot (10) à l'état fermé ; et
le mécanisme de détection (28) est disposé au niveau d'une partie adjacente au mécanisme de verrouillage (19).

5. Véhicule de travail selon la revendication 4, dans lequel :
le mécanisme de verrouillage (19) comprend :
une partie engagée (20) prévue au niveau d'une partie arrière du capot (10) ;
un crochet (21) configuré pour pouvoir pivoter autour d'un axe de pivot (Y1) s'étendant parallèlement à l'axe de pivot (Y2) et soumis à une action de pression provenant du dessus par la partie engagée (20) en association avec un mouvement pivotant du capot (10) vers le côté de fermeture pour être engagé avec la partie engagée (20) ; et
la partie détectée (20) et la partie engagée (20) sont identiques entre elles.
